# EUROPÄISCHE PATENTSCHRIFT

(11) **EP 3 741 899 B1**
(45) Veröffentlichungstag und Bekanntmachung des Hinweises auf die Patenterteilung: **16.08.2023**
(21) Anmeldenummer: 20173151.0
(22) Anmeldetag: 06.05.2020
(51) Int. Cl.: D06F 33/30, D06F 39/08, D06F 105/06, D06F 103/48, D06F 105/08

(54) **WÄSCHEPFLEGEGERÄT MIT EINER PUMPE UND EINER STEUERUNG UND ENTSPRECHENDES VERFAHREN ZUM PUMPEN VON WASCHFLÜSSIGKEIT**
LAUNDRY CARE DEVICE WITH A PUMP AND A CONTROL UNIT AND A CORRESPONDING METHOD FOR PUMPING WASHING LIQUID
APPAREIL D'ENTRETIEN DU LINGE COMPRENANT UNE POMPE ET UN DISPOSITIF DE COMMANDE ET PROCÉDÉ CORRESPONDANT DE POMPAGE DE LIQUIDE DE LAVAGE

(30) Priorität: 20.05.2019 DE 102019207351
(43) Veröffentlichungstag der Anmeldung: 25.11.2020
(73) Patentinhaber: BSH Hausgeräte GmbH, 81739 München (DE)
(72) Erfinder: Hahn, Kevin, 14548 Schwielowsee (DE); Römer, Raymond, 10965 Berlin (DE)

(56) Entgegenhaltungen:
- EP-A1- 3 257 424
- EP-A2- 0 332 893
- DE-A1-102009 046 782

## Beschreibung

Die vorliegende Erfindung betrifft ein Wäschepflegegerät mit einer Steuerung.

In einem Wäschepflegegerät wird Waschflüssigkeit aus einem Laugenbehälter des Wäschepflegegeräts durch eine Pumpleitung mittels einer Pumpe während eines Pumpvorgangs abgepumpt, um die Waschflüssigkeit z.B. während eines Abpumpvorgangs aus dem Wäschepflegegerät abzupumpen, oder um die Waschflüssigkeit z.B. während eines Umpumpvorgangs innerhalb des Wäschepflegegeräts umzupumpen und die Wäsche erneut zu benetzen.

Bei herkömmlichen Wäschepflegegeräten ohne Rückschlagventil kann nach dem Deaktivieren der Pumpe die in der Pumpleitung stehende Wäschepflegegerät aufgrund des Höhenunterschieds zwischen der in der Pumpleitung stehenden Waschflüssigkeit und der Pumpe in der Pumpleitung zurückströmen und unter Umständen bis in den Laugenbehälter dringen und die Wäsche erneut benetzen.

In der EP 2 746 451 A1 ist ein Verfahren zum Abpumpen von Flüssigkeit aus einem wasserführenden Haushaltsgerät, sowie ein wasserführendes Haushaltsgerät offenbart.

In der EP 3 257 424 A1 ist eine Pumpe mit Impeller für ein Wäschebehandlungsgerät offenbart.

Es ist die der Erfindung zugrundeliegende Aufgabe, ein Wäschepflegegerät anzugeben, bei dem ein Rückströmen von abgepumpter Waschflüssigkeit in einen Laugenbehälter des Wäschepflegegeräts verhindert wird.

Diese Aufgabe wird durch die Gegenstände mit den Merkmalen nach den unabhängigen Ansprüchen gelöst. Vorteilhafte Ausführungsformen sind Gegenstand der abhängigen Ansprüche, der Beschreibung und der Zeichnungen.

Gemäß einem ersten Aspekt wird die erfindungsgemäße Aufgabe durch ein Wäschepflegegerät gelöst, mit einem Laugenbehälter zur Aufnahme von Waschflüssigkeit, wobei der Laugenbehälter eine Ablassöffnung aufweist, wobei die Ablassöffnung mit einer Saugleitung fluidtechnisch verbunden ist, einer drehzahlvariablen Pumpe zum Pumpen von Waschflüssigkeit, wobei die Pumpe eine Saugkammer aufweist, welche fluidtechnisch mit der Saugleitung verbunden ist, und wobei die Pumpe eine Druckkammer aufweist, welche fluidtechnisch mit der Saugkammer und fluidtechnisch mit einer Pumpleitung verbunden ist, wobei die Pumpe einen Impeller aufweist, welcher ausgebildet ist, in einer ersten Rotationsrichtung und einer der ersten Rotationsrichtung entgegengesetzten zweiten Rotationsrichtung zu rotieren, und einer Steuerung zum Steuern der drehzahlvariablen Pumpe, wobei die Steuerung ausgebildet ist, die Pumpe während eines Pumpvorgangs zu aktivieren, um den Impeller in der zweiten Rotationsrichtung zu rotieren und Waschflüssigkeit in einer Pumprichtung aus der Saugkammer in die Druckkammer und aus der Druckkammer in die Pumpleitung zu pumpen, wobei die Steuerung ausgebildet ist, während eines ersten Zeitabschnitts bei einer deaktivierten Pumpe eine Rotation des Impellers in der ersten Rotationsrichtung zu erfassen, um von der Pumpleitung in die Druckkammer und von der Druckkammer in die Saugkammer in einer der Pumprichtung entgegengesetzten Rückstromrichtung zurückströmende Waschflüssigkeit zu erfassen, und wobei die Steuerung ausgebildet ist, während eines sich an den ersten Zeitabschnitt anschließenden zweiten Zeitabschnitts die Pumpe zu aktivieren, um den Impeller in der zweiten Rotationsrichtung zu rotieren und den Volumenstrom der rückströmenden Waschflüssigkeit zu reduzieren.

Dadurch wird der technische Vorteil erreicht, dass bei einem Erfassen von in der Rückstromrichtung von der Pumpleitung durch die Pumpe zurückströmender Waschflüssigkeit, die Steuerung anschließend die Pumpe aktiviert, um einen Pumpdruck zu erzeugen, welcher den Volumenstrom der rückströmenden Waschflüssigkeit wirksam reduzieren kann und somit ein Zurückströmen der Waschflüssigkeit durch die Saugleitung in den Laugenbehälter verhindert.

Da während des ersten Zeitabschnitts von der Pumpleitung durch die Pumpe zurückströmende Waschflüssigkeit den Impeller in eine Rotation in der ersten Rotationsrichtung versetzt, welche der zweiten Rotationsrichtung des Impellers während des Pumpvorgangs entgegengesetzt gerichtet ist, dient das Erfassen einer Rotation des Impellers in der ersten Rotationsrichtung gleichzeitig dem Erfassen von in der Rückstromrichtung zurückströmender Waschflüssigkeit durch die Pumpe.

Wird während des sich anschließenden zweiten Zeitabschnitts die Pumpe aktiviert, um den Impeller in den zweiten Rotationsrichtung zu rotieren, wird durch die Pumpe ein Pumpgegendruck erzeugt, welcher den Volumenstrom der rückströmenden Waschflüssigkeit wirksam reduzieren kann.

Insbesondere weist das Wäschepflegegerät gemäß der vorliegenden Offenbarung kein Rückschlagventil auf, welches in der Saugleitung oder an der Ablassöffnung des Laugenbehälters angeordnet ist. Insbesondere in Wäschepflegegeräten mit Umpumpsystem wird auf ein entsprechendes Rückschlagventil verzichtet.

Unter einem Wäschepflegegerät wird ein Gerät verstanden, welches zur Wäschepflege eingesetzt wird, wie z.B. eine Waschmaschine oder ein Wäschetrockner. Insbesondere wird unter solch einem Wäschepflegegerät ein Haushaltswäschepflegegerät verstanden. Also ein Wäschepflegegerät, welches im Rahmen der Haushaltsführung verwendet wird, und mit dem Wäsche in haushaltsüblichen Mengen behandelt wird.

In einer vorteilhaften Ausführungsform des Wäschepflegegeräts weist die drehzahlvariable Pumpe einen elektrischen Motor zum Rotieren des Impellers in der zweiten Rotationsrichtung auf, und weist die Steuerung ein Leistungserfassungselement zum Erfassen eines elektrischen Leistungswertes des elektrischen Motors auf, wobei das Leistungserfassungselement ausgebildet ist, einen durch Rotation des Impellers in der ersten Rotationsrichtung induzierten ersten elektrischen Detektionsleistungswert zu erfassen, wobei die Steuerung ausgebildet ist, den ersten Zeitabschnitt zu beenden, und während des sich an den ersten Zeitabschnitt anschließenden zweiten Zeitabschnitts die Pumpe zum Rotieren des Impellers in der zweiten Rotationsrichtung zu aktivieren, wenn der erfasste erste elektrische Detektionsleistungswert einen ersten elektrischen Schwellenleistungswert überschreitet.

Dadurch wird der technische Vorteil erreicht, dass das Leistungserfassungselement anhand der elektrischen Leistungsparameter des elektrischen Motors der Pumpe in der Rückstromrichtung zurückströmende Waschflüssigkeit wirksam erfassen kann. Hierbei regt die in der Rückstromrichtung durch die Pumpe zurückströmende Waschflüssigkeit den Impeller der Pumpe zu einer Rotation in der ersten Rotationsrichtung an, wodurch ein elektrischer Leistungswert, insbesondere ein erster elektrischer Detektionsleistungswert, in dem elektrischen Motor induziert wird, welcher durch das Leistungserfassungselement erfasst wird.

Insbesondere weist der elektrische Motor einen permanenterregten bürstenlosen Synchronantrieb auf.

Überschreitet der erfasste erste elektrische Detektionsleistungswert den ersten elektrischen Schwellenleistungswert erkennt die Steuerung dass die Menge der rückströmenden Waschflüssigkeit zu groß ist, und aktiviert die Pumpe, um den Impeller in der zweiten Rotationsrichtung zu rotieren und einen Pumpgegendruck zu erzeugen, welcher ausreichend ist, um den Volumenstrom der rückströmenden Waschflüssigkeit zu reduzieren.

In einer vorteilhaften Ausführungsform des Wäschepflegegeräts ist das Leistungserfassungselement ausgebildet, einen die Rotation des Impellers in der zweiten Rotationsrichtung bewirkenden zweiten elektrischen Detektionsleistungswert zu erfassen, und ist die Steuerung ausgebildet, den zweiten Zeitabschnitt zu beenden, und die Pumpe zu deaktivieren, wenn der erfasste zweite elektrische Detektionsleistungswert einen zweiten elektrischen Schwellenleistungswert überschreitet, wobei der zweite elektrische Schwellenleistungswert insbesondere geringer als der erste elektrische Schwellenleistungswert ist.

Dadurch wird der technische Vorteil erreicht, dass das Leistungserfassungselement anhand des während des zweiten Zeitabschnitts erfassten zweiten elektrischen Detektionsleistungswerts die den Pumpgegendruck erzeugende Pumpleistung der Pumpe erfassen kann. Beim Überschreiten des zweiten elektrischen Schwellenleistungswerts durch den erfassten zweiten elektrischen Detektionsleistungswert erkennt die Steuerung, dass die Pumpleistung der Pumpe ausreichend ist, um den Volumenstrom der in der Rückstromrichtung zurückströmenden Waschflüssigkeit wirksam zu reduzieren, so dass der zweite Zeitabschnitt beendet werden kann.

In einer vorteilhaften Ausführungsform des Wäschepflegegeräts weist das Wäschepflegegerät eine Waschflüssigkeitszuführeinrichtung auf, welche mit dem Laugenbehälter fluidtechnisch verbunden und ausgebildet ist, Waschflüssigkeit dem Laugenbehälter zuzuführen, wobei die Steuerung ausgebildet ist, die Waschflüssigkeitszuführeinrichtung zum Zuführen von Waschflüssigkeit zu aktivieren, wenn der erfasste erste elektrische Detektionsleistungswert einen Minimalschwellenleistungswert unterschreitet.

Dadurch wird der technische Vorteil erreicht, dass bei einer sehr geringen erfassten Menge von rückströmender Flüssigkeit, welche durch ein Unterschreiten des Minimalschwellenleistungswerts durch den ersten elektrischen Detektionsleistungswert mittels des Leistungserfassungselements erfasst wird, Waschflüssigkeit durch die Waschflüssigkeitszuführeinrichtung dem Laugenbehälter zugeführt wird, um ein Austreten von unangenehmen Gerüchen aus der Saugleitung zu verhindern, bzw. um die geringe Menge an Waschflüssigkeit in der Saugleitung zu verdünnen und die Keimbelastung zu reduzieren.

Hierbei weist das Wäschepflegegerät insbesondere ein Ausgabeelement auf, welches ausgebildet ist, einen Warnhinweis an den Nutzer des Wäschepflegegeräts auszugeben, und ist die Steuerung ausgebildet, das Ausgabeelement zum Ausgeben eines Warnhinweises an den Nutzer zu aktivieren, wenn der erfasste erste elektrische Detektionsleistungswert den Minimalschwellenleistungswert unterschreitet. Somit kann der Nutzer darauf hingewiesen werden, dass die Menge an Waschflüssigkeit in der Saugleitung möglicherweise zu gering ist, um den Wäschepflegebetrieb vorteilhaft fortsetzen zu können.

In einer vorteilhaften Ausführungsform des Wäschepflegegeräts weist das Wäschepflegegerät einen Strömungssensor zum Erfassen einer ersten Strömungsgeschwindigkeit von aus der Pumpleitung in die Saugleitung in der Rückstromrichtung zurückströmender Waschflüssigkeit und zum Erfassen einer zweiten Strömungsgeschwindigkeit von aus der Saugleitung in die Pumpleitung in der Pumprichtung gepumpter Waschflüssigkeit auf, wobei die Steuerung ausgebildet ist, den ersten Zeitabschnitt zu beenden, und während des sich an den ersten Zeitabschnitt anschließenden zweiten Zeitabschnitts die Pumpe zum Rotieren des Impellers in der zweiten Rotationsrichtung zu aktivieren, wenn die erfasste erste Strömungsgeschwindigkeit einen ersten Strömungsgeschwindigkeitsschwellenwert überschreitet, und/oder wobei die Steuerung ausgebildet ist, den zweiten Zeitabschnitt zu beenden, und die Pumpe zu deaktivieren, wenn die erfasste zweite Strömungsgeschwindigkeit einen zweiten Strömungsgeschwindigkeitsschwellenwert überschreitet.

Dadurch wird der technische Vorteil erreicht, dass die rückströmende Waschflüssigkeit, bzw. die gepumpte Waschflüssigkeit durch einen Strömungsgeschwindigkeitssensor wirksam erfasst werden kann. Insbesondere ist der Strömungsgeschwindigkeitssensor als ein zusätzlich zu dem Leistungserfassungselement vorgesehener redundanter Strömungsgeschwindigkeitssensor, insbesondere redundanter Strömungsgeschwindigkeitssensor mit einem weiteren Impeller, ausgebildet, wobei die Steuerung ausgebildet ist, auf Basis eines durch das Leistungselement erfassten elektrischen Leistungswertes und auf Basis eines durch den redundanten Strömungsgeschwindigkeitssensor erfassten Strömungsgeschwindigkeitswertes den ersten und/oder zweiten Zeitabschnitt zu beenden. Insbesondere ist der Strömungsgeschwindigkeitssensor als ein alternativ zu dem Leistungserfassungselement vorgesehener Strömungsgeschwindigkeitssensor, insbesondere als ein magnetischer Strömungsgeschwindigkeitssensor, ausgebildet.

In einer vorteilhaften Ausführungsform des Wäschepflegegeräts ist die Steuerung ausgebildet nach einer vorbestimmten ersten Zeitdauer den ersten Zeitabschnitt zu beenden und den zweiten Zeitabschnitt zu beginnen, und/oder ist die Steuerung ausgebildet nach einer vorbestimmten zweiten Zeitdauer den zweiten Zeitabschnitt zu beenden.

Dadurch wird der technische Vorteil erreicht, dass alternativ zu der Verwendung eines Leistungserfassungselements und/oder eines Strömungsgeschwindigkeitssensors der erste und/oder zweite Zeitabschnitt auch dann durch die Steuerung beendet werden können, wenn eine vorbestimmte erste, bzw. zweite Zeitdauer verstrichen ist. Hierbei ist die erste Zeitdauer insbesondere in Abhängigkeit der verwendeten Pumpleitung und/oder der verwendeten Pumpe derart gering gewählt, dass ein Rückströmen der Waschflüssigkeit in den Laugenbehälter während des ersten Zeitabschnitts ausgeschlossen werden kann.

In einer vorteilhaften Ausführungsform des Wäschepflegegeräts ist die Steuerung ausgebildet, während des zweiten Zeitabschnitts die Pumpe zum Rotieren des Impellers in der zweiten Rotationsrichtung mit einer Minimaldrehzahl zu aktivieren, um den Volumenstrom der rückströmenden Waschflüssigkeit zu reduzieren oder den Volumenstrom der rückströmenden Waschflüssigkeit zu stoppen.

Dadurch wird der technische Vorteil erreicht, dass die Minimaldrehzahl ausreichend ist, um den Volumenstrom der rückströmenden Waschflüssigkeit zu reduzieren, bzw. zu stoppen, die Minimaldrehzahl jedoch nicht so groß ist, dass während des zweiten Zeitabschnitts die Waschflüssigkeit erneut in der Pumprichtung gepumpt wird. Insbesondere ist die Minimaldrehzahl geringer als eine Nominaldrehzahl der Pumpe während eines Abpumpvorgangs.

In einer vorteilhaften Ausführungsform des Wäschepflegegeräts ist die Steuerung ausgebildet, während des zweiten Zeitabschnitts die Pumpe zum Rotieren des Impellers in der zweiten Rotationsrichtung mit einer Maximaldrehzahl zu aktivieren, um Waschflüssigkeit aus der Saugleitung in die Saugkammer, aus der Saugkammer in die Druckkammer und aus der Druckkammer bis zu einem Pumppegel in die Pumpleitung zu pumpen, wobei der Pumppegel insbesondere in einer Pumppegelhöhe angeordnet ist, welche größer als eine Einbauhöhe der Pumpe innerhalb des Wäschepflegegeräts ist.

Dadurch wird der technische Vorteil erreicht, dass die Maximaldrehzahl ausreichend ist, um einen Pumpendruck zu erzeugen, welcher die Waschflüssigkeit bis zu einem Pumppegel in der Pumpleitung pumpt, die Maximaldrehzahl ist jedoch nicht so groß ist, dass während des zweiten Zeitabschnitt die Waschflüssigkeit über den Pumppegel hinaus aus dem Wäschepflegegerät abgepumpt wird. Insbesondere ist die Maximaldrehzahl geringer als eine Nominaldrehzahl der Pumpe während eines Abpumpvorgangs. Insbesondere ist die Maximaldrehzahl größer als eine Minimaldrehzahl der Pumpe. Insbesondere ist die Pumppegelhöhe zwischen der Einbauhöhe der Pumpe und einer Öffnungshöhe einer Gehäuseöffnung eines Gerätegehäuses des Wäschepflegegeräts angeordnet, durch welche die Pumpleitung, insbesondere Abpumpleitung, aus dem Wäschepflegegerät geleitet wird.

In einer vorteilhaften Ausführungsform des Wäschepflegegeräts ist die Steuerung ausgebildet, während eines Korrekturzeitintervalls des zweiten Zeitabschnitts die Pumpe zum kurzzeitigen Rotieren des Impellers mit einer Korrekturdrehzahl in der zweiten Rotationsrichtung zu aktivieren, um den Volumenstrom der in der Rückstromrichtung rückströmenden Waschflüssigkeit während des Korrekturzeitintervalls signifikant zu reduzieren, wobei die Steuerung insbesondere ausgebildet ist, während eines sich an das Korrekturzeitintervall des zweiten Zeitabschnitts anschließenden Pumpzeitintervalls des zweiten Zeitabschnitts die Pumpe zum Rotieren des Impellers mit einer Pumpdrehzahl in der zweiten Rotationsrichtung zu aktivieren, um den Volumenstrom der in der Rückstromrichtung rückströmenden Waschflüssigkeit während des Pumpzeitintervalls zu reduzieren, wobei die Korrekturdrehzahl insbesondere größer als die Pumpdrehzahl ist.

Dadurch wird der technische Vorteil erreicht, dass nach dem Erfassen der rückströmenden Waschflüssigkeit durch das kurzzeitige Aktivieren der Pumpe mit der Korrekturdrehzahl zeitnah ein Pumpengegendruck aufgebaut werden kann, welcher den Volumenstrom der rückströmenden Waschflüssigkeit schnell wirksam reduziert. Anschließend kann während des sich an das Korrekturzeitintervall anschließenden Pumpzeitintervalls mit einer insbesondere geringeren Pumpdrehzahl der Volumenstrom weiter wirksam reduziert werden.

In einer vorteilhaften Ausführungsform des Wäschepflegegeräts ist die Pumpe in einem unteren Bereich eines durch ein Gerätegehäuse begrenzten Gehäuseinnenraums des Wäschepflegegeräts angeordnet, wobei der untere Bereich einem Gehäuseboden des Gerätegehäuses zugewandt ist, und erstreckt sich die mit der Pumpe fluidtechnisch verbundene Pumpleitung, von dem unteren Bereich des Gehäuseinnenraums in einen oberen Bereich des Gehäuseinnenraums, wobei der obere Bereich des Gehäuseinnenraums einer Gehäuseoberseite des Gerätegehäuses zugewandt ist, wobei die Pumpe insbesondere in einer Einbauhöhe des Wäschepflegegeräts angeordnet ist, und wobei die Pumpleitung zumindest abschnittsweise oberhalb der Einbauhöhe angeordnet ist.

Dadurch wird der technische Vorteil erreicht, dass durch die sich von dem unteren Bereich in den oberen Bereich des Wäschepflegegeräts erstreckende Pumpleitung bei einer deaktivierten Pumpe ein Leerlaufen der Saugleitung verhindert wird.

In einer vorteilhaften Ausführungsform des Wäschepflegegeräts umfasst die Pumpleitung eine Abpumpleitung, welche mit einem Außenbereich des Wäschepflegegeräts fluidtechnisch verbunden ist, wobei die Pumpe ausgebildet ist, während eines Abpumpvorgangs Waschflüssigkeit aus der Saugleitung in die Saugkammer, aus der Saugkammer in die Druckkammer, aus der Druckkammer in die Abpumpleitung und aus der Abpumpleitung in den Außenbereich des Wäschepflegegeräts zu pumpen.

Dadurch wird der technische Vorteil erreicht, dass eine als Abpumpleitung ausgebildete Pumpleitung ein wirksames Abpumpen der Waschflüssigkeit aus dem Wäschepflegegerät ermöglicht.

In einer vorteilhaften Ausführungsform des Wäschepflegegeräts weist das Wäschepflegegerät ein Einlasselement, insbesondere eine Einlassdüse, zum Einleiten von Waschflüssigkeit in den Laugenbehälter auf, und umfasst die Pumpleitung eine Umpumpleitung, welche mit dem Einlasselement fluidtechnisch verbunden ist, wobei die drehzahlvariable Pumpe ausgebildet ist, während eines Umpumpvorgangs Waschflüssigkeit durch die Ablassöffnung aus dem Laugenbehälter in die Saugleitung abzupumpen und die abgepumpte Waschflüssigkeit von der Saugleitung in die Saugkammer, von der Saugkammer in die Druckkammer, von der Druckkammer in die Umpumpleitung und durch das Einlasselement wieder in den Laugenbehälter zu pumpen.

Dadurch wird der technische Vorteil erreicht, dass eine als Umpumpleitung ausgebildete Pumpleitung ein wirksames Umpumpen der Waschflüssigkeit innerhalb des Wäschepflegegeräts ermöglicht.

In einer vorteilhaften Ausführungsform des Wäschepflegegeräts weist die drehzahlvariable Pumpe eine erste Unterpumpe mit einer mit der Saugleitung fluidtechnisch verbundenen Saugkammer und mit einer mit der Abpumpleitung fluidtechnisch verbundenen Druckkammer, und eine weitere Unterpumpe mit einer mit der Saugleitung fluidtechnisch verbundenen weiteren Saugkammer und mit einer mit der Abpumpleitung fluidtechnisch verbundenen weiteren Druckkammer auf, oder weist die drehzahlvariable Pumpe eine mit der Saugleitung fluidtechnisch verbundene Saugkammer, eine mit der Saugkammer fluidtechnisch verbundene erste Druckkammer, welche mit der Abpumpleitung fluidtechnisch verbunden ist, und eine mit der Saugkammer fluidtechnisch verbundene zweite Druckkammer auf, welche mit der Umpumpleitung fluidtechnisch verbunden ist.

Dadurch wird der technische Vorteil erreicht, dass in einem Wäschepflegegerät in dem eine Abpumpleitung und eine Umpumpleitung vorhanden ist, die erste Unterpumpe Waschflüssigkeit durch die Abpumpleitung pumpen kann, während die zweite Unterpumpe Waschflüssigkeit durch die Umpumpleitung pumpt, also zwei separate Pumpen vorhanden sind. Alternativ kann auch nur eine einzige Pumpe vorhanden sein, welche die Waschflüssigkeit entweder durch die erste Druckkammer in die Abpumpleitung oder durch die zweite Druckkammer in die Umpumpleitung pumpt.

Gemäß einem zweiten Aspekt wird die erfindungsgemäße Aufgabe durch ein Verfahren zum Pumpen von Waschflüssigkeit in einem Wäschepflegegerät gelöst, wobei das Wäschepflegegerät einen Laugenbehälter zur Aufnahme von Waschflüssigkeit aufweist, wobei der Laugenbehälter eine Ablassöffnung aufweist, wobei die Ablassöffnung mit einer Saugleitung fluidtechnisch verbunden ist, wobei das Wäschepflegegerät eine drehzahlvariable Pumpe zum Pumpen von Waschflüssigkeit aufweist, wobei die Pumpe eine Saugkammer aufweist, welche fluidtechnisch mit der Saugleitung verbunden ist, und wobei die Pumpe eine Druckkammer aufweist, welche fluidtechnisch mit der Saugkammer und fluidtechnisch mit einer Pumpleitung verbunden ist, wobei die Pumpe einen Impeller aufweist, welcher ausgebildet ist, in einer ersten Rotationsrichtung und einer der ersten Rotationsrichtung entgegengesetzten zweiten Rotationsrichtung zu rotieren, wobei das Wäschepflegegerät eine Steuerung zum Steuern der drehzahlvariablen Pumpe aufweist, welche ausgebildet ist, die Pumpe während eines Pumpvorgangs zu aktivieren, um den Impeller in der zweiten Rotationsrichtung zu rotieren und Waschflüssigkeit in einer Pumprichtung aus der Saugkammer in die Druckkammer und aus der Druckkammer in die Pumpleitung zu pumpen, wobei das Verfahren die folgenden Verfahrensschritte umfasst, Erfassen einer Rotation des Impellers in der ersten Rotationsrichtung während eines ersten Zeitabschnitts bei einer deaktivierten Pumpe durch die Steuerung, um von der Pumpleitung in die Druckkammer und von der Druckkammer in die Saugkammer in einer der Pumprichtung entgegengesetzten Rückstromrichtung zurückströmende Waschflüssigkeit zu erfassen, Aktivieren der Pumpe während eines sich an den ersten Zeitabschnitt anschließenden zweiten Zeitabschnitts durch die Steuerung, um den Impeller in der zweiten Rotationsrichtung zu rotieren und den Volumenstrom der rückströmenden Waschflüssigkeit zu reduzieren.

Dadurch wird der technische Vorteil erreicht, dass ein Rückströmen von Waschflüssigkeit in den Laugenbehälter verhindert wird.

In einer vorteilhaften Ausführungsform des Verfahrens weist die drehzahlvariable Pumpe einen elektrischen Motor zum Rotieren des Impellers in der zweiten Rotationsrichtung auf, und weist die Steuerung ein Leistungserfassungselement zum Erfassen eines elektrischen Leistungswertes des elektrischen Motors auf, wobei das Leistungserfassungselement ausgebildet ist, einen durch Rotation des Impellers in der ersten Rotationsrichtung induzierten ersten elektrischen Detektionsleistungswert zu erfassen, und wobei das Aktivieren der Pumpe während eines sich an den ersten Zeitabschnitt anschließenden zweiten Zeitabschnitts durch die Steuerung durchgeführt wird, wenn der erfasste erste elektrische Detektionsleistungswert einen ersten elektrischen Schwellenleistungswert überschreitet.

Ausführungsbeispiele der Erfindung sind in den Zeichnungen dargestellt und werden im Folgenden näher beschrieben.

Es zeigen:
- Fig. 1: eine schematische Ansicht eines Wäschepflegegeräts gemäß einer ersten Ausführungsform;
- Fig. 2: eine schematische Ansicht eines Wäschepflegegeräts gemäß einer zweiten Ausführungsform; und
- Fig. 3: eine schematische Darstellung eines Verfahrens zum Pumpen von Waschflüssigkeit in einem Wäschepflegegerät.

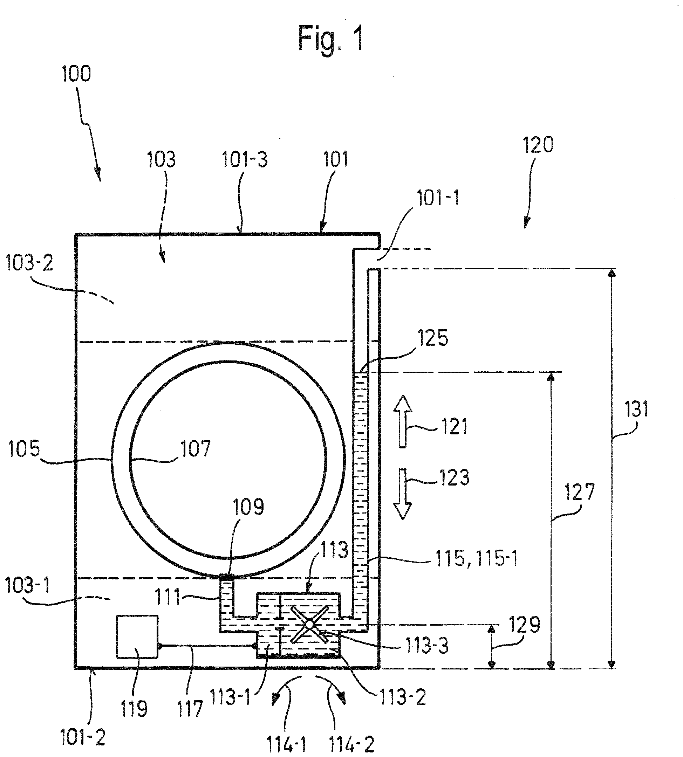

Fig. 1 zeigt eine schematische Ansicht eines Wäschepflegegeräts 100 gemäß einer ersten Ausführungsform, wie z.B. eine Waschmaschine. Das Wäschepflegegerät 100 weist ein Gehäuse 101 auf, welches einen Gehäuseinnenraum 103 des Wäschepflegegeräts 100 begrenzt. Das Gehäuse 101 weist eine Gehäuseöffnung 101-1 auf. Das Wäschepflegegerät 100 weist einen Laugenbehälter 105 zur Aufnahme von Waschflüssigkeit auf. Das Wäschepflegegerät 100 weist eine Wäschetrommel 107 zur Aufnahme von Wäsche auf, welche in dem Laugenbehälter 105 angeordnet ist. Der Laugenbehälter 105 weist eine Ablassöffnung 109 auf, welche mit einer Saugleitung 111 des Wäschepflegegeräts 100 fluidtechnisch verbunden ist.

Das Wäschepflegegerät 100 weist eine drehzahlvariable Pumpe 113 zum Pumpen von Waschflüssigkeit auf, welche eine Saugkammer 113-1 aufweist, welche fluidtechnisch mit der Saugleitung 111 verbunden ist. Die Pumpe 113 weist ferner eine Druckkammer 113-2 auf, welche fluidtechnisch mit einer Pumpleitung 115, insbesondere Abpumpleitung 115-1, fluidtechnisch verbunden ist. Die Pumpe 113 weist ferner einen Impeller 113-3 auf, welcher ausgebildet ist, in einer ersten Rotationsrichtung 114-1 und in einer der ersten Rotationsrichtung 114-1 entgegengesetzten zweiten Rotationsrichtung 114-2 zu rotieren.

Das Wäschepflegegerät 100 weist ferner eine Steuerung 119 auf, welche mit der Pumpe 113 durch eine Steuerungsverbindung 117 steuerungstechnisch verbunden und ausgebildet ist die Pumpe 113 während eines Pumpvorgangs zu aktivieren.

Die Steuerung 119 ist ausgebildet, die Pumpe 113 während eines Pumpvorgangs, insbesondere Abpumpvorgangs, zu aktivieren, um den Impeller 113-3 in der zweiten Rotationsrichtung 114-2 zu rotieren und Waschflüssigkeit aus der Saugleitung 111 durch die Saugkammer 113-1, durch die Druckkammer 113-2 und durch die Pumpleitung 115, insbesondere Abpumpleitung 115-1, in einer Pumprichtung 121 in einen Außenbereich 120 des Wäschepflegegeräts 100 zu pumpen.

Wie aus der Fig. 1 zu entnehmen ist, ist die Pumpe 113 insbesondere in einem unteren Bereich 103-1 des Gehäuseinnenraums 103 des Wäschepflegegeräts 100 angeordnet, wobei der untere Bereich 103-1 einem Gehäuseboden 101-2 des Gerätegehäuses 101 zugewandt ist. Die Pumpleitung 115, insbesondere Abpumpleitung 115-1 erstreckt sich insbesondere von dem unteren Bereich 103-1 des Gehäuseinnenraums 103 in einen oberen Bereich 103-2 des Gehäuseinnenraums 103, wobei der obere Bereich 103-2 des Gehäuseinnenraums 103 einer Gehäuseoberseite 101-3 des Gerätegehäuses 101 zugewandt ist.

Nach einem Abpumpvorgang wird die Pumpe 113 durch die Steuerung 119 deaktiviert und in der Pumpleitung 115, insbesondere Abpumpleitung 115-1, vorhandene Waschflüssigkeit kann durch den Höhenunterschied zwischen der in Pumpleitung 115 stehenden Waschflüssigkeit und der Pumpe 113 in einer der Pumprichtung 121 entgegengesetzten Rückstromrichtung 123 von der Pumpleitung 115 in die Druckkammer 113-2 und von der Druckkammer 113-2 in die Saugkammer 113-1 zurückströmen.

In herkömmlichen Wäschepflegegeräten 100 ohne Rückschlagventil an der Ablassöffnung 109, bzw. in der Saugleitung 111 kann die in der Rückstromrichtung 123 durch die Pumpe 113 zurückströmende Waschflüssigkeit aus der Saugkammer 113-1 durch die Saugleitung 111 und durch die Ablassöffnung 109 des Laugenbehälters 105 bis in den Laugenbehälter 105 zurückströmen und in der Pumpleitung 115, insbesondere Abpumpleitung 115-1, vorhandene verbrauchte, bzw. verschmutze Waschflüssigkeit bis in den Laugenbehälter 105 befördern und unter Umständen die in der Wäschetrommel 107 aufgenommene Wäsche benetzen, was nicht gewünscht ist.

Um ein derartiges Rückströmen in den Laugenbehälter 105 zu verhindern, ist die Steuerung 119 des Wäschepflegegeräts 100 gemäß der vorliegenden Offenbarung ausgebildet während eines ersten Zeitabschnitts eine Rotation des Impellers 113-3 der Pumpe 113 in der ersten Rotationsrichtung 114-1 zu erfassen, um von der Pumpleitung 115, insbesondere Abpumpleitung 115-1, in die Druckkammer 113-2 und von der Druckkammer 113-2 in die Saugkammer 113-1 zurückströmende Waschflüssigkeit zu erfassen.

Da die erste Rotationsrichtung 114-1 der zweiten Rotationsrichtung 114-2, welche einem Abpumpvorgang der Pumpe 113 zugeordnet ist, entgegengesetzt ist, erkennt die Steuerung 119 durch eine Rotation des Impellers 113-3 in der ersten Rotationsrichtung 114-1, dass Waschflüssigkeit aus der Pumpleitung 115 durch die Pumpe 113 in der Rückstromrichtung 123 zurückströmt.

In einem sich an den ersten Zeitabschnitt anschließenden zweiten Zeitabschnitt aktiviert die Steuerung 119 daraufhin die Pumpe 113, um den Impeller 113-3 in der zweiten Rotationsrichtung 114-2 zu rotieren und den Volumenstrom der rückströmenden Waschflüssigkeit zu reduzieren.

Somit erzeugt die Pumpe 113 durch die Rotation des Impellers 113-3 in der zweiten Rotationsrichtung 114-2 während des zweiten Zeitabschnitts einen dem Volumenstrom der in der Rückstromrichtung 123 zurückströmenden Waschflüssigkeit entgegengerichteten Pumpdruck, so dass der Volumenstrom der ruckströmenden Waschflüssigkeit zumindest reduziert, insbesondere gestoppt wird.

Dies ist insbesondere von Vorteil bei Wäschepflegegeräten 100, welche kein Rückschlagventil an der Ablassöffnung 109 des Laugenbehälter 105, bzw. in der Saugleitung 111 aufweisen.

Zudem können hydraulische Überschwinger beim Abschalten der Pumpe 113 nach dem Ende des Abpumpvorgangs reduziert werden.

Die Steuerung 119 ist insbesondere ausgebildet, während des zweiten Zeitabschnitts die Pumpe 113 zum Rotieren des Impellers 113-3 in der zweiten Rotationsrichtung 114-2 mit einer Minimaldrehzahl zu aktvieren, um den Volumenstrom der in der Rückstromrichtung 123 rückströmenden Waschflüssigkeit zu reduzieren oder den Volumenstrom der in der Rückstromrichtung 123 rückströmenden Waschflüssigkeit zu stoppen. Durch die Rotation des Impellers 113-3 mit der Minimaldrehzahl wird insbesondere verhindert, dass die in der Rückstromrichtung 123 zurückströmende Waschflüssigkeit erneut in der Pumprichtung 121 zurückgepumpt wird.

Alternativ ist die Steuerung 119 insbesondere ausgebildet, während des zweiten Zeitabschnitts die Pumpe 113 zum Rotieren des Impellers 113-3 in der zweiten Rotationsrichtung 114-2 mit einer Maximaldrehzahl zu aktivieren, wobei die Maximaldrehzahl größer als eine Minimaldrehzahl ist, um Waschflüssigkeit aus der Saugleitung 111 in die Saugkammer 113-1, aus der Saugkammer 113-1 in die Druckkammer 113-2 und aus der Druckkammer 113-2 bis zu einem Pumppegel 125 in die Pumpleitung 115 zu pumpen.

Im Gegensatz zur Minimaldrehzahl ist die Maximaldrehzahl hierbei so gewählt, dass ein in der zweiten Rotationsrichtung 114-2 rotierender Impeller 113-3 die Strömungsrichtung der in der Rückstromrichtung 123 rückströmenden Waschflüssigkeit ändert, so dass die Waschflüssigkeit durch die Pumpe 113 erneut in die Pumprichtung 121 gepumpt wird. Die Waschflüssigkeit wird hierbei allerdings nicht durch die Pumpleitung 115, insbesondere Abpumpleitung 115-1 aus dem Wäschepflegegerät 100 abgepumpt, sondern die Waschflüssigkeit wird nur bis zu dem Pumppegel 125 in der Pumpleitung 115 gepumpt.

Steht die Waschflüssigkeit an dem Pumppegel 125 ist in diesem Fall die durch Pumpe 113 aufgebrachte Pumpkraft und die auf die in der Pumpleitung 115 an dem Pumppegel 125 stehende Waschflüssigkeit wirkende Schwerkraft gleich, so dass eine in der Pumpleitung 115 stehende Waschflüssigkeitssäule erhalten wird.

Insbesondere ist die Steuerung 119 ausgebildet, während eines Korrekturzeitintervalls des zweiten Zeitabschnitts die Pumpe 113 zum kurzzeitigen Rotieren des Impellers 113-3 mit einer Korrekturdrehzahl in der zweiten Rotationsrichtung 114-2 zu aktivieren, um den Volumenstrom der in der Rückstromrichtung 123 rückströmenden Waschflüssigkeit während des Korrekturzeitintervalls signifikant zu reduzieren.

Insbesondere ist die Korrekturdrehzahl der Pumpe 113 größer als eine Minimaldrehzahl und/oder eine Maximaldrehzahl der Pumpe 113.

Somit rotiert der Impeller 113-3 während des Korrekturzeitintervalls des zweiten Zeitabschnitts zuerst mit der hohen Korrekturdrehzahl, um eine möglichst wirksame, insbesondere abrupte, Reduzierung des Volumenstroms der in der Rückstromrichtung 123 zurückströmenden Waschflüssigkeit sicherzustellen.

Die Steuerung 119 ist insbesondere ausgebildet, während eines sich an das Korrekturzeitintervall des zweiten Zeitabschnitts anschließenden Pumpzeitintervalls des zweiten Zeitabschnitts die Pumpe 113 zum Rotieren des Impellers 113-3 mit einer Pumpdrehzahl in der zweiten Rotationsrichtung 114-2 zu aktivieren, wobei die Pumpdrehzahl insbesondere geringer als die Korrekturdrehzahl ist.

Wenn die kurzzeitige Reduktion des Volumenstroms während des Korrekturzeitintervalls nicht ausreichend ist, kann die Steuerung 119 anschließend den Impeller 113-3 zum Rotieren in der zweiten Rotationsrichtung 114-2 aktivieren, um die Waschflüssigkeit mit der Pumpdrehzahl zu pumpen.

Insbesondere ist der Pumppegel 125 in einer Pumppegelhöhe 127 angeordnet, welche größer als eine Einbauhöhe 129 der Pumpe 113 ist. Insbesondere ist die Pumppegelhöhe 127 zwischen der Einbauhöhe 129 der Pumpe 113 und einer Öffnungshöhe 131 der Gehäuseöffnung 101-1 des Wäschepflegegeräts 100 angeordnet.

Die drehzahlvariable Pumpe 113 weist insbesondere einen in Fig. 1 nicht gezeigten elektrischen Motor zum Rotieren des Impellers 113-3 in der zweiten Rotationsrichtung 114-2 auf. Durch aufgebrachte elektrische Energie rotiert der elektrische Motor den Impeller 113-3 in der zweiten Rotationsrichtung 114-2 und bewirkt dadurch eine Pumpkraft auf die Waschflüssigkeit.

Wenn jedoch bei deaktivierter Pumpe 113 während des ersten Zeitabschnitts Waschflüssigkeit aus der Pumpleitung 115 in der Rückstromrichtung 123 zurückströmt und den Impeller 113-3 in der ersten Rotationsrichtung 114-1 rotiert, fungiert der elektrische Motor der Pumpe 113 als Generator und induziert eine elektrische Energie, welche insbesondere von einem Inverter der Pumpe 113 erfasst werden kann.

Hierbei weist die Steuerung 119 insbesondere ein in Fig. 1 nicht gezeigtes Leistungserfassungselement zum Erfassen eines elektrischen Leistungswertes des elektrischen Motors auf. Das Leistungserfassungselement ist ausgebildet, einen durch Rotation des Impellers 113-3 in der ersten Rotationsrichtung 114-1 induzierten ersten elektrischen Detektionsleistungswert zu erfassen.

Somit wird in einem generatorischen Betrieb der Pumpe 113, insbesondere durch einen Inverter der Pumpe 113, eine rückgewonnene elektrische Energie der Pumpe 113 erfasst, welcher durch die Rotation des permanentmagnet-erregten Rotors in die Feldentwicklung des Motors induziert wird.

Die Steuerung 119 ist ausgebildet, den ersten Zeitabschnitt zu beenden, und während des sich an den ersten Zeitabschnitt anschließenden zweiten Zeitabschnitts die Pumpe 113 zum Rotieren des Impellers 113-3 in der zweiten Rotationsrichtung 114-2 zu aktivieren, wenn der erfasste erste elektrische Detektionsleistungswert einen ersten elektrischen Schwellenleistungswert überschreitet.

Hierbei kann ein vorbestimmter erster Schwellenleistungswert derart festgelegt sein, dass bei einem bestimmten Wäschepflegegerät 100, bzw. einer bestimmten Pumpe 113 und Pumpleitung 115, der Rückstrom der in der Rückstromrichtung 123 zurückströmenden Waschflüssigkeit einen Wert erreicht hat, welcher als ausreichend angesehen wird, um die Steuerung 119 dazu zu veranlassen, einen gegenwirkenden Pumpdruck aufzubauen und dadurch den Volumenstrom der rückströmenden Waschflüssigkeit zu reduzieren, bzw. dem Volumenstrom zu stoppen, oder die Waschflüssigkeit sogar bis zu einem Pumppegel 125 in der Pumpleitung 115 zu pumpen.

Durch das Leistungserfassungselement kann auch ein Ende des zweiten Zeitabschnitts angesteuert werden. Das Leistungserfassungselement ist hierbei ausgebildet, einen die Rotation des Impellers 113-3 in der zweiten Rotationsrichtung 114-2 bewirkenden zweiten elektrischen Detektionsleistungswert zu erfassen, und die Steuerung 119 ist ausgebildet, den zweiten Zeitabschnitt zu beenden, und die Pumpe 113 zu deaktivieren, wenn der erfasste zweite elektrische Detektionsleistungswert einen zweiten elektrischen Schwellenleistungswert überschreitet.

Der zweite elektrische Schwellenleistungswert, welcher insbesondere geringer als der erste elektrische Schwellenleistungswert ist, kann hierbei derart gewählt sein, dass sichergestellt wird, dass die Rotation des Impellers 113-3 in der zweiten Rotationsrichtung 114-2 einen ausreichend starken Pumpendruck erzeugt, um den Rückstrom der Waschflüssigkeit wirksam zu stoppen.

Mittels des Leistungserfassungselement können auch weitere Funktionalitäten des Wäschepflegegeräts 100 gesteuert werden.

Insbesondere ist die Steuerung 119 ausgebildet, eine mit dem Laugenbehälter 105 fluidtechnisch verbundene und in Fig. 1 nicht dargestellte Waschflüssigkeitszuführeinrichtung zum Zuführen von Waschflüssigkeit zu aktivieren, wenn der durch das Leistungselement erfasste erste elektrische Detektionsleistungswert einen Minimalschwellenleistungswert unterschreitet.

Hierbei kann die Steuerung 119 erfassen, wenn während des ersten Zeitabschnitts nur eine sehr geringe Menge an Waschflüssigkeit aus der Pumpleitung 115 durch die Pumpe 113 in die Saugleitung 111 zurückströmt, z.B. wenn der Nutzer die als Abpumpleitung 115-1 ausgebildete Pumpleitung 115 derart außerhalb des Wäschepflegegeräts 100 verlegt, dass ein Bereich der verlegten Abpumpleitung 115-1 räumlich tiefer als die Pumpe 113 angeordnet ist, so dass ein großer Teil der Waschflüssigkeit aus der Saugleitung 111 aus dem Wäschepflegegerät 100 ausgeleitet werden kann. In diesem Fall bewirkte die Zuführung von Waschflüssigkeit in den Laugenbehälter 105 und daraus in die Saugleitung 111 eine vorteilhafte Geruchsverschlussfunktion des Wäschepflegegeräts 100, bzw. ermöglichtes die in der Saugleitung 111 verbleibende Restmenge an Waschflüssigkeit zu verdünnen, um die Keimbelastung in der Waschflüssigkeit zu reduzieren.

Alternativ oder zusätzlich zum Leistungserfassungselement kann die während des ersten Zeitabschnitts in der Rückstromrichtung 123 zurückströmende Waschflüssigkeit auch insbesondere durch einen Strömungssensor zum Erfassen von Strömungsgeschwindigkeiten von Waschflüssigkeit in der Pumpleitung bestimmt werden.

Ein insbesondere in dem Wäschepflegegerät 100 vorhandener Strömungssensor ist ausgebildet eine erste Strömungsgeschwindigkeit von aus der Pumpleitung 115 in die Saugleitung 111 in der Rückstromrichtung 123 zurückströmender Waschflüssigkeit und eine zweite Strömungsgeschwindigkeit von aus der Saugleitung 111 in die Pumpleitung 115 in der Pumprichtung 121 gepumpter Waschflüssigkeit zu erfassen.

Die Steuerung 119 ist ausgebildet, den ersten Zeitabschnitt zu beenden, und während des sich an den ersten Zeitabschnitt anschließenden zweiten Zeitabschnitts die Pumpe 113 zum Rotieren des Impellers 113-3 in der zweiten Rotationsrichtung 114-2 zu aktivieren, wenn die erfasste erste Strömungsgeschwindigkeit einen ersten Strömungsgeschwindigkeitsschwellenwert überschreitet. Alternativ oder zusätzlich ist die Steuerung 119 ausgebildet, den zweiten Zeitabschnitt zu beenden und die Pumpe 113 zu deaktivieren, wenn die erfasste zweite Strömungsgeschwindigkeit einen zweiten Strömungsgeschwindigkeitsschwellenwert überschreitet.

Alternativ zum Leistungserfassungselement oder zum Strömungssensor ist die Steuerung 119 insbesondere ausgebildet nach einer vorbestimmten ersten Zeitdauer den ersten Zeitabschnitt zu beenden und den zweiten Zeitabschnitt zu beginnen, und/oder ist die Steuerung 119 ausgebildet nach einer vorbestimmten zweiten Zeitdauer den zweiten Zeitabschnitt zu beenden. Die erste vorbestimmte Zeitdauer kann insbesondere derart gering gewählt werden, dass ein Rückströmen der Waschflüssigkeit in den Laugenbehälter 105 während des ersten Zeitabschnitts verhindert wird.

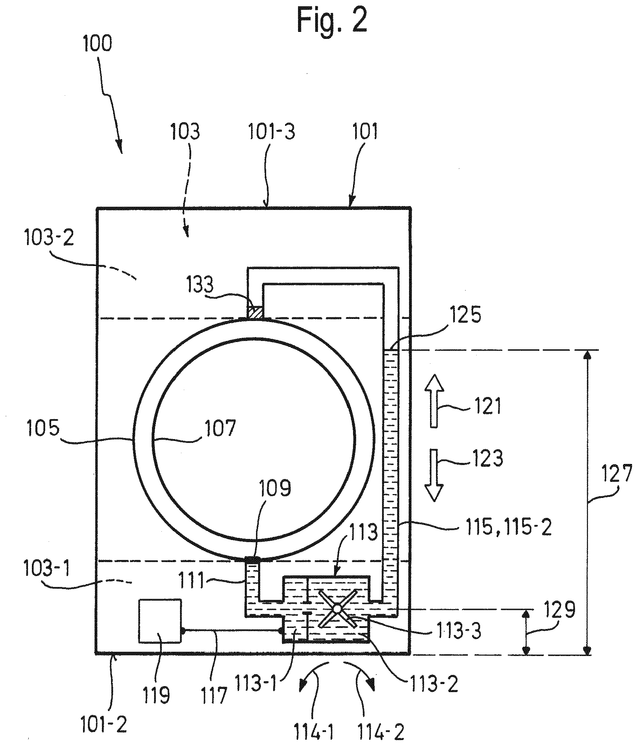

Fig. 2 zeigt eine schematische Ansicht eines Wäschepflegegeräts gemäß einer zweiten Ausführungsform.

Das in der Fig. 2 dargestellte Wäschepflegegerät 100 gemäß der zweiten Ausführungsform entspricht dem in der Fig. 1 dargestellten Wäschepflegegerät 100 gemäß der ersten Ausführungsform, bis darauf, dass in der zweiten Ausführungsform die Pumpleitung 115 nicht als eine Abpumpleitung 115-1 zum Abpumpen von Waschflüssigkeit aus dem Wäschepflegegerät 100, sondern als eine Umpumpleitung 115-2 zum Umpumpen von Waschflüssigkeit innerhalb des Wäschepflegegeräts 100 ausgebildet ist.

Das in der Fig. 2 dargestellte Wäschepflegegerät 100 weist ein Einlasselement 133, insbesondere eine Einlassdüse, zum Einleiten von Waschflüssigkeit in den Laugenbehälter 105 auf. Die als Umpumpleitung 115-2 ausgebildete Pumpleitung 115 ist mit dem Einlasselement 133 fluidtechnisch verbunden, wobei die drehzahlvariable Pumpe 113 ausgebildet ist, während eines Umpumpvorgangs Waschflüssigkeit durch die Ablassöffnung 109 aus dem Laugenbehälter 105 in die Saugleitung 111 abzupumpen und die abgepumpte Waschflüssigkeit von der Saugleitung 111 in die Saugkammer 113-1, von der Saugkammer 113-1 in die Druckkammer 113-2, von der Druckkammer 113-2 in die Umpumpleitung 115-2 und durch das Einlasselement 133 wieder in den Laugenbehälter 105 zu pumpen.

Somit kann durch das Umpumpen eine wirksame Wiederbefeuchtung der in der Wäschetrommel 107 aufgenommenen Wäsche mit Waschflüssigkeit sichergestellt werden.

Die Steuerung 119 des Wäschepflegegeräts 100 gemäß der in Fig. 2 dargestellten Ausführungsform ist ausgebildet während eines ersten Zeitabschnitts eine Rotation des Impellers 113-3 der Pumpe 113 in der ersten Rotationsrichtung 114-1 zu erfassen, um von der Pumpleitung 115, insbesondere Umpumpleitung 115-2, in die Druckkammer 113-2 und von der Druckkammer 113-2 in die Saugkammer 113-1 zurückströmende Waschflüssigkeit zu erfassen.

In einem sich an den ersten Zeitabschnitt anschließenden zweiten Zeitabschnitt aktiviert die Steuerung 119 daraufhin die Pumpe 113, um den Impeller 113-3 in der zweiten Rotationsrichtung 114-2 zu rotieren und den Volumenstrom der rückströmenden Waschflüssigkeit zu reduzieren.

Für Details hierzu wird auf die Ausführungen zur Fig. 1 verwiesen.

Gemäß einer weiteren Ausführungsform kann das in Fig. 2 dargestellte Wäschepflegegerät 100 eine weitere drehzahlvariable Pumpe 113, insbesondere erste Unterpumpe 113, aufweisen, welche mit einer weiteren Pumpleitung 115, insbesondere Abpumpleitung 115-1, gemäß der in Fig. 1 dargestellten Ausführungsform ausgebildet ist, und wobei die weitere drehzahlvariable Pumpe 113 ausgebildet ist, Waschflüssigkeit durch die Abpumpleitung 115-1 aus dem Wäschepflegegerät 100 abzupumpen.

Somit kann je nachdem ob die Pumpe 113 oder die weitere Pumpe 113 aktiviert wird, die Waschflüssigkeit entweder durch die Abpumpleitung 115-1 aus dem Wäschepflegegerät 100 abgepumpt oder durch die Umpumpleitung 115-2 innerhalb des Wäschepflegegeräts 100 umgepumpt werden.

Gemäß einer weiteren Ausführungsform kann die in Fig. 2 dargestellte Pumpe 113 eine mit der Saugkammer 113-1 fluidtechnisch verbundene zweite Druckkammer 113-2, welche mit der Umpumpleitung 115-2 fluidtechnisch verbunden ist und eine mit der Saugkammer 113-1 fluidtechnisch verbundene erste Druckkammer 113-2, welche mit der Abpumpleitung 115-1 fluidtechnisch verbunden ist, aufweisen, um Waschflüssigkeit je nach Betriebssituation entweder durch die erste Druckkammer 113-2 und durch die Abpumpleitung 115-1 aus dem Wäschepflegegerät 100 abzupumpen oder durch die zweite Druckkammer 113-2 und durch die Umpumpleitung 115-2 in dem Wäschepflegegerät 100 umzupumpen.

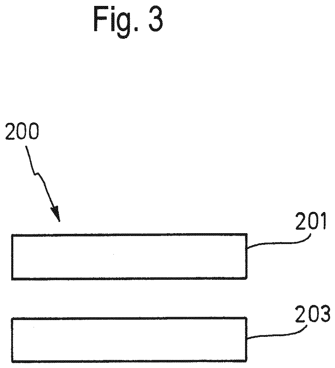

Fig. 3 zeigt eine schematische Darstellung eines Verfahrens zum Pumpen von Waschflüssigkeit in einem Wäschepflegegerät.

Das Verfahren 200 umfasst als ersten Verfahrensschritt das Erfassen 201 einer Rotation des Impellers 113-3 in der ersten Rotationsrichtung 114-1 während eines ersten Zeitabschnitts bei einer deaktivierten Pumpe 113 durch die Steuerung 119, um von der Pumpleitung in die Druckkammer 113-2 und von der Druckkammer 113-2 in die Saugkammer 113-1 in einer der Pumprichtung 121 entgegengesetzten Rückstromrichtung 123 zurückströmende Waschflüssigkeit zu erfassen.

Das Verfahren 200 umfasst als zweiten Verfahrensschritt das Aktivieren 203 der Pumpe 113 während eines sich an den ersten Zeitabschnitt anschließenden zweiten Zeitabschnitt durch die Steuerung 119, um den Impeller 113-3 in der zweiten Rotationsrichtung 114-2 zu rotieren und den Volumenstrom der rückströmenden Waschflüssigkeit zu reduzieren.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### Bezugszeichenliste

- 100: Wäschepflegegerät
- 101: Gerätegehäuse
- 101-1: Gehäuseöffnung
- 101-2: Gehäuseboden
- 101-3: Gehäuseoberseite
- 103: Gehäuseinnenraum
- 103-1: Unterer Bereich des Gehäuseinnenraums
- 103-2: Oberer Bereich des Gehäuseinnenraums
- 105: Laugenbehälter
- 107: Wäschetrommel
- 109: Ablassöffnung
- 111: Saugleitung
- 113: Pumpe
- 113-1: Saugkammer
- 113-2: Druckkammer
- 113-3: Impeller
- 114-1: Erste Rotationsrichtung
- 114-2: Zweite Rotationsrichtung
- 115: Pumpleitung
- 115-1: Abpumpleitung
- 115-2: Umpumpleitung
- 117: Steuerungsverbindung
- 119: Steuerung
- 120: Außenbereich des Wäschepflegegeräts
- 121: Pumprichtung
- 123: Rückstromrichtung
- 125: Pumppegel
- 127: Pumppegelhöhe
- 129: Einbauhöhe
- 131: Öffnungshöhe
- 133: Einlasselement
- 200: Verfahren zum Pumpen von Waschflüssigkeit
- 201: Erster Verfahrensschritt: Erfassen einer Rotation des Impellers
- 203: Zweiter Verfahrensschritt: Aktivieren der drehzahlvariablen Pumpe

## Patentansprüche

1. Wäschepflegegerät (100) mit einem Laugenbehälter (105) zur Aufnahme von Waschflüssigkeit, wobei der Laugenbehälter (105) eine Ablassöffnung (109) aufweist, wobei die Ablassöffnung (109) mit einer Saugleitung (111) fluidtechnisch verbunden ist, einer drehzahlvariablen Pumpe (113) zum Pumpen von Waschflüssigkeit, wobei die Pumpe (113) eine Saugkammer (113-1) aufweist, welche fluidtechnisch mit der Saugleitung (111) verbunden ist, und wobei die Pumpe (113) eine Druckkammer (113-2) aufweist, welche fluidtechnisch mit der Saugkammer (113-1) und fluidtechnisch mit einer Pumpleitung (115, 115-1, 115-2) verbunden ist, wobei die Pumpe (113) einen Impeller (113-3) aufweist, welcher ausgebildet ist, in einer ersten Rotationsrichtung (114-1) und einer der ersten Rotationsrichtung (114-1) entgegengesetzten zweiten Rotationsrichtung (114-2) zu rotieren, und einer Steuerung (119) zum Steuern der drehzahlvariablen Pumpe (113), wobei die Steuerung (119) ausgebildet ist, die Pumpe (113) während eines Pumpvorgangs zu aktivieren, um den Impeller (113-3) in der zweiten Rotationsrichtung (114-2) zu rotieren und Waschflüssigkeit in einer Pumprichtung (121) aus der Saugkammer (113-1) in die Druckkammer (113-2) und aus der Druckkammer (113-2) in die Pumpleitung (115, 115-1, 115-2) zu pumpen, **dadurch gekennzeichnet, dass**
die Steuerung (119) ausgebildet ist, während eines ersten Zeitabschnitts bei einer deaktivierten Pumpe (113) eine Rotation des Impellers (113-3) in der ersten Rotationsrichtung (114-1) zu erfassen, um von der Pumpleitung (115, 115-1, 115-2) in die Druckkammer (113-2) und von der Druckkammer (113-2) in die Saugkammer (113-1) in einer der Pumprichtung (121) entgegengesetzten Rückstromrichtung (123) zurückströmende Waschflüssigkeit zu erfassen, und dass
die Steuerung (119) ausgebildet ist, während eines sich an den ersten Zeitabschnitt anschließenden zweiten Zeitabschnitts die Pumpe (113) zu aktivieren, um den Impeller (113-3) in der zweiten Rotationsrichtung (114-2) zu rotieren und den Volumenstrom der rückströmenden Waschflüssigkeit zu reduzieren.

2. Wäschepflegegerät (100) nach Anspruch 1, **dadurch gekennzeichnet, dass** die drehzahlvariable Pumpe (113) einen elektrischen Motor zum Rotieren des Impellers (113-3) in der zweiten Rotationsrichtung (114-2) aufweist, und dass die Steuerung (119) ein Leistungserfassungselement zum Erfassen eines elektrischen Leistungswertes des elektrischen Motors aufweist, wobei das Leistungserfassungselement ausgebildet ist, einen durch Rotation des Impellers (113-3) in der ersten Rotationsrichtung (114-1) induzierten ersten elektrischen Detektionsleistungswert zu erfassen,
wobei die Steuerung (119) ausgebildet ist, den ersten Zeitabschnitt zu beenden, und während des sich an den ersten Zeitabschnitt anschließenden zweiten Zeitabschnitts die Pumpe (113) zum Rotieren des Impellers (113-3) in der zweiten Rotationsrichtung (114-2) zu aktivieren, wenn der erfasste erste elektrische Detektionsleistungswert einen ersten elektrischen Schwellenleistungswert überschreitet.

3. Wäschepflegegerät (100) nach Anspruch 2, **dadurch gekennzeichnet, dass** das Leistungserfassungselement ausgebildet ist, einen die Rotation des Impellers (113-3) in der zweiten Rotationsrichtung (114-2) bewirkenden zweiten elektrischen Detektionsleistungswert zu erfassen, und dass
die Steuerung (119) ausgebildet ist, den zweiten Zeitabschnitt zu beenden, und die Pumpe (113) zu deaktivieren, wenn der erfasste zweite elektrische Detektionsleistungswert einen zweiten elektrischen Schwellenleistungswert überschreitet, wobei der zweite elektrische Schwellenleistungswert insbesondere geringer als der erste elektrische Schwellenleistungswert ist.

4. Wäschepflegegerät (100) nach Anspruch 2 oder 3, **dadurch gekennzeichnet, dass** das Wäschepflegegerät (100) eine Waschflüssigkeitszuführeinrichtung aufweist, welche mit dem Laugenbehälter (105) fluidtechnisch verbunden und ausgebildet ist, Waschflüssigkeit dem Laugenbehälter (105) zuzuführen, wobei die Steuerung (119) ausgebildet ist, die Waschflüssigkeitszuführeinrichtung zum Zuführen von Waschflüssigkeit zu aktivieren, wenn der erfasste erste elektrische Detektionsleistungswert einen Minimalschwellenleistungswert unterschreitet.

5. Wäschepflegegerät (100) nach einem der vorangehenden Ansprüche, **dadurch gekennzeichnet, dass** das Wäschepflegegerät (100) einen Strömungssensor zum Erfassen einer ersten Strömungsgeschwindigkeit von aus der Pumpleitung (115, 115-1, 115-2) in die Saugleitung (111) in der Rückstromrichtung (123) zurückströmender Waschflüssigkeit und zum Erfassen einer zweiten Strömungsgeschwindigkeit von aus der Saugleitung (111) in die Pumpleitung (115, 115-1, 115-2) in der Pumprichtung (121) gepumpter Waschflüssigkeit aufweist,
wobei die Steuerung (119) ausgebildet ist, den ersten Zeitabschnitt zu beenden, und während des sich an den ersten Zeitabschnitt anschließenden zweiten Zeitabschnitts die Pumpe (113) zum Rotieren des Impellers (113-3) in der zweiten Rotationsrichtung (114-2) zu aktivieren, wenn die erfasste erste Strömungsgeschwindigkeit einen ersten Strömungsgeschwindigkeitsschwellenwert überschreitet, und/oder dass
die Steuerung (119) ausgebildet ist, den zweiten Zeitabschnitt zu beenden, und die Pumpe (113) zu deaktivieren, wenn die erfasste zweite Strömungsgeschwindigkeit einen zweiten Strömungsgeschwindigkeitsschwellenwert überschreitet.

6. Wäschepflegegerät (100) nach Anspruch 1, **dadurch gekennzeichnet, dass** die Steuerung (119) ausgebildet ist nach einer vorbestimmten ersten Zeitdauer den ersten Zeitabschnitt zu beenden und den zweiten Zeitabschnitt zu beginnen, und/oder dass die Steuerung (119) ausgebildet ist nach einer vorbestimmten zweiten Zeitdauer den zweiten Zeitabschnitt zu beenden.

7. Wäschepflegegerät (100) nach einem der vorangehenden Ansprüche, **dadurch gekennzeichnet, dass** die Steuerung (119) ausgebildet ist, während des zweiten Zeitabschnitts die Pumpe (113) zum Rotieren des Impellers (113-3) in der zweiten Rotationsrichtung (114-2) mit einer Minimaldrehzahl zu aktivieren, um den Volumenstrom der rückströmenden Waschflüssigkeit zu reduzieren oder den Volumenstrom der rückströmenden Waschflüssigkeit zu stoppen.

8. Wäschepflegegerät (100) nach einem der vorangehenden Ansprüche 1 bis 6, **dadurch gekennzeichnet, dass** die Steuerung (119) ausgebildet ist, während des zweiten Zeitabschnitts die Pumpe (113) zum Rotieren des Impellers (113-3) in der zweiten Rotationsrichtung (114-2) mit einer Maximaldrehzahl zu aktivieren, um Waschflüssigkeit aus der Saugleitung (111) in die Saugkammer (113-1), aus der Saugkammer (113-1) in die Druckkammer (113-2) und aus der Druckkammer (113-2) bis zu einem Pumppegel (125) in die Pumpleitung (115, 115-1, 115-2) zu pumpen, wobei der Pumppegel (125) insbesondere in einer Pumppegelhöhe (127) angeordnet ist, welche größer als eine Einbauhöhe (129) der Pumpe (113) innerhalb des Wäschepflegegeräts (100) ist.

9. Wäschepflegegerät (100) nach einem der vorangehenden Ansprüche, **dadurch gekennzeichnet, dass** die Steuerung (119) ausgebildet ist, während eines Korrekturzeitintervalls des zweiten Zeitabschnitts die Pumpe (113) zum kurzzeitigen Rotieren des Impellers (113-3) mit einer Korrekturdrehzahl in der zweiten Rotationsrichtung (114-2) zu aktivieren, um den Volumenstrom der in der Rückstromrichtung (123) rückströmenden Waschflüssigkeit während des Korrekturzeitintervalls signifikant zu reduzieren,
wobei die Steuerung (119) insbesondere ausgebildet ist, während eines sich an das Korrekturzeitintervall des zweiten Zeitabschnitts anschließenden Pumpzeitintervalls des zweiten Zeitabschnitts die Pumpe (113) zum Rotieren des Impellers (113-3) mit einer Pumpdrehzahl in der zweiten Rotationsrichtung (114-2) zu aktivieren, um den Volumenstrom der in der Rückstromrichtung (123) rückströmenden Waschflüssigkeit während des Pumpzeitintervalls zu reduzieren, wobei die Korrekturdrehzahl insbesondere größer als die Pumpdrehzahl ist.

10. Wäschepflegegerät (100) nach einem der vorangehenden Ansprüche, **dadurch gekennzeichnet, dass** die Pumpe (113) in einem unteren Bereich (103-1) eines durch ein Gerätegehäuse (101) begrenzten Gehäuseinnenraums (103) des Wäschepflegegeräts (100) angeordnet ist, wobei der untere Bereich (103-1) einem Gehäuseboden (101-2) des Gerätegehäuses (101) zugewandt ist, und dass
sich die mit der Pumpe (113) fluidtechnisch verbundene Pumpleitung (115, 115-1, 115-2), von dem unteren Bereich (103-1) des Gehäuseinnenraums (103) in einen oberen Bereich (103-2) des Gehäuseinnenraums (103) erstreckt, wobei der obere Bereich (103-2) des Gehäuseinnenraums (103) einer Gehäuseoberseite (101-3) des Gerätegehäuses (101) zugewandt ist, wobei die Pumpe (113) insbesondere in einer Einbauhöhe (129) des Wäschepflegegeräts (100) angeordnet ist, und wobei die Pumpleitung (115, 115-1, 115-2) zumindest abschnittsweise oberhalb der Einbauhöhe (129) angeordnet ist.

11. Wäschepflegegerät (100) nach einem der vorangehenden Ansprüche, **dadurch gekennzeichnet, dass** die Pumpleitung (115, 115-1, 115-2) eine Abpumpleitung (115-1) umfasst, welche mit einem Außenbereich (120) des Wäschepflegegeräts (100) fluidtechnisch verbunden ist, wobei die Pumpe (113) ausgebildet ist, während eines Abpumpvorgangs Waschflüssigkeit aus der Saugleitung (111) in die Saugkammer (113-1), aus der Saugkammer (113-1) in die Druckkammer (113-2), aus der Druckkammer (113-2) in die Abpumpleitung (115-1) und aus der Abpumpleitung (115-1) in den Außenbereich (120) des Wäschepflegegeräts (100) zu pumpen.

12. Wäschepflegegerät (100) nach einem der vorangehenden Ansprüche, **dadurch gekennzeichnet, dass** das Wäschepflegegerät (100) ein Einlasselement (133), insbesondere eine Einlassdüse, zum Einleiten von Waschflüssigkeit in den Laugenbehälter (105) aufweist, und dass die Pumpleitung (115, 115-1, 115-2) eine Umpumpleitung (115-2) umfasst, welche mit dem Einlasselement (133) fluidtechnisch verbunden ist, wobei die drehzahlvariable Pumpe (113) ausgebildet ist, während eines Umpumpvorgangs Waschflüssigkeit durch die Ablassöffnung (109) aus dem Laugenbehälter (105) in die Saugleitung (111) abzupumpen und die abgepumpte Waschflüssigkeit von der Saugleitung (111) in die Saugkammer (113-1), von der Saugkammer (113-1) in die Druckkammer (113-2) von der Druckkammer (113-2) in die Umpumpleitung (115-2) und durch das Einlasselement (133) wieder in den Laugenbehälter (105) zu pumpen.

13. Wäschepflegegerät (100) nach Anspruch 12, **dadurch gekennzeichnet, dass** die drehzahlvariable Pumpe (113) eine erste Unterpumpe (113) mit einer mit der Saugleitung (111) fluidtechnisch verbundenen Saugkammer (113-1) und mit einer mit der Abpumpleitung (115-1) fluidtechnisch verbundenen Druckkammer (113-2), und eine weitere Unterpumpe (113) mit einer mit der Saugleitung (111) fluidtechnisch verbundenen weiteren Saugkammer (113-1) und mit einer mit der Umpumpleitung (115-2) fluidtechnisch verbundenen weiteren Druckkammer (113-2) aufweist, oder dass
die drehzahlvariable Pumpe (113) eine mit der Saugleitung (111) fluidtechnisch verbundene Saugkammer (113-1), eine mit der Saugkammer (113-1) fluidtechnisch verbundene erste Druckkammer (113-2) aufweist, welche mit der Abpumpleitung (115-1) fluidtechnisch verbunden ist, und eine mit der Saugkammer (113-1) fluidtechnisch verbundene zweite Druckkammer (113-2) aufweist, welche mit der Umpumpleitung (115-2) fluidtechnisch verbunden ist.

14. Verfahren (200) zum Pumpen von Waschflüssigkeit in einem Wäschepflegegerät gemäß einem der Ansprüche 1 bis 13, **dadurch gekennzeichnet, dass** das Verfahren (200) die folgenden Verfahrensschritte umfasst,
Erfassen (201) einer Rotation des Impellers (113-3) in der ersten Rotationsrichtung (114-1) während eines ersten Zeitabschnitts bei einer deaktivierten Pumpe (113) durch die Steuerung (119), um von der Pumpleitung (115, 115-1, 115-2) in die Druckkammer (113-2) und von der Druckkammer (113-2) in die Saugkammer (113-1) in einer der Pumprichtung (121) entgegengesetzten Rückstromrichtung (123) zurückströmende Waschflüssigkeit zu erfassen,
Aktivieren (203) der Pumpe (113) während eines sich an den ersten Zeitabschnitt anschließenden zweiten Zeitabschnitts durch die Steuerung (119), um den Impeller (113-3) in der zweiten Rotationsrichtung (114-2) zu rotieren und den Volumenstrom der rückströmenden Waschflüssigkeit zu reduzieren.

15. Verfahren (200) nach Anspruch 14, **dadurch gekennzeichnet, dass** die drehzahlvariable Pumpe (113) einen elektrischen Motor zum Rotieren des Impellers (113-3) in der zweiten Rotationsrichtung (114-2) aufweist, und dass die Steuerung (119) ein Leistungserfassungselement zum Erfassen eines elektrischen Leistungswertes des elektrischen Motors aufweist, wobei das Leistungserfassungselement ausgebildet ist, einen durch Rotation des Impellers (113-3) in der ersten Rotationsrichtung (114-1) induzierten ersten elektrischen Detektionsleistungswert zu erfassen, und dass
das Aktivieren (203) der Pumpe (113) während eines sich an den ersten Zeitabschnitt anschließenden zweiten Zeitabschnitts durch die Steuerung (119) durchgeführt wird, wenn der erfasste erste elektrische Detektionsleistungswert einen ersten elektrischen Schwellenleistungswert überschreitet.

## Claims

1. Laundry care appliance (100) having an outer tub (105) for receiving washing liquid, wherein the outer tub (105) has a discharge opening (109), wherein the discharge opening (109) is fluidically connected to a suction pipe (111), a variable-speed pump (113) for pumping washing liquid, wherein the pump (113) has a suction chamber (113-1), which is fluidically connected to the suction pipe (111), and wherein the pump (113) has a pressure chamber (113-2), which is fluidically connected to the suction chamber (113-1) and fluidically connected to a pump pipe (115, 115-1, 115-2), wherein the pump (113) has an impeller (113-3), which is embodied to rotate in a first direction of rotation (114-1) and a second direction of rotation (114-2) which is opposite to the first direction of rotation (114-1), and a controller (119) for controlling the variable-speed pump (113), wherein the controller (119) is embodied to activate the pump (113) during a pumping process in order to rotate the impeller (113-3) in the second direction of rotation (114-2) and to pump washing liquid in a pump direction (121) out of the suction chamber (113-1) into the pressure chamber (113-2) and out of the pressure chamber (113-2) into the pump pipe (115, 115-1, 115-2), **characterised in that**
the controller (119) is embodied to record a rotation of the impeller (113-3) in the first direction of rotation (114-1) during a first time segment with a deactivated pump (113), in order to record washing liquid flowing back in a return flow direction (123) which is opposite to the pump direction (121) from the pump pipe (115, 115-1, 115-2) into the pressure chamber (113-2) and from the pressure chamber (113-2) into the suction chamber (113-1), and that
the controller (119) is embodied to activate the pump (113) during a second time segment which connects to the first time segment, in order to rotate the impeller (113-3) in the second direction of rotation (114-2) and to reduce the volume flow of the return flowing washing liquid.

2. Laundry care appliance (100) according to claim 1, **characterised in that** the variable-speed pump (113) has an electric motor for rotating the impeller (113-3) in the second direction of rotation (114-2), and that the controller (119) has a performance recording element for recording an electrical performance value of the electric motor, wherein the performance recording element is embodied to record a first electrical detection performance value induced by rotation of the impeller (113-3) in the first direction of rotation (114-1),
wherein the controller (119) is embodied to terminate the first time segment and during the second time segment which connects to the first time segment to activate the pump (113) in order to rotate the impeller (113-3) in the second direction of rotation (114-2), if the recorded first electrical detection performance value exceeds a first electrical threshold performance value.

3. Laundry care appliance (100) according to claim 2, **characterised in that** the performance recording element is embodied to record a second electrical detection performance value which effects the rotation of the impeller (113-3) in the second direction of rotation (114-2), and that
the controller (119) is embodied to terminate the second time segment and to deactivate the pump (113) if the recorded second electrical detection performance value exceeds a second electrical threshold performance value, wherein the second electrical threshold performance value is in particular lower than the first electrical threshold performance value.

4. Laundry care appliance (100) according to claim 2 or 3, **characterised in that** the laundry care appliance (100) has a washing liquid supply facility, which is fluidically connected to the outer tub (105) and is embodied to supply washing liquid to the outer tub (105), wherein the controller (119) is embodied to activate the washing liquid supply facility to supply washing liquid if the recorded first electrical detection performance value does not reach a minimum threshold performance value.

5. Laundry care appliance (100) according to one of the preceding claims, **characterised in that** the laundry care appliance (100) has a flow sensor for recording a first flow speed of washing liquid flowing back out of the pump pipe (115, 115-1, 115-2) into the suction pipe (111) in the return flow direction (123) and for recording a second flow speed of washing liquid pumped out of the suction pipe (111) into the pump pipe (115, 115-1, 115-2) in the pump direction (121),
wherein the controller (119) is embodied to terminate the first time segment and during the second time segment connecting to the first time segment to activate the pump (113) in order to rotate the impeller (113-3) in the second direction of rotation (114-2) if the recorded first flow speed exceeds a first flow speed threshold value, and/or that
the controller (119) is embodied to terminate the second time segment and to deactivate the pump (113) if the recorded second flow speed exceeds a second flow speed threshold value.

6. Laundry care appliance (100) according to claim 1, **characterised in that** the controller (119) is embodied to terminate the first time segment after a predetermined first duration and to begin the second time segment and/or that the controller (119) is embodied to terminate the second time segment after a predetermined second duration.

7. Laundry care appliance (100) according to one of the preceding claims, **characterised in that** the controller (119) is embodied to activate the pump (113) to rotate the impeller (113-3) in the second direction of rotation (114-2) with a minimum rotational speed during the second time segment in order to reduce the volume flow of the return-flowing washing liquid or to stop the volume flow of the return-flowing washing liquid.

8. Laundry care appliance (100) according to one of the preceding claims 1 to 6, **characterised in that** the controller (119) is embodied, during the second time segment, to activate the pump (113) in order to rotate the impeller (113-3) in the second direction of rotation (114-2) with a maximum rotational speed, in order to pump washing liquid out of the suction pipe (111) into the section chamber (113-1), out of the suction chamber (113-1) into the pressure chamber (113-2) and out of the pressure chamber (113-2) up to a pump level (125) into the pump pipe (115, 115-1, 115-2), wherein the pump level (125) is arranged in particular at a pump level height (127) which is greater than an installation height (129) of the pump (113) within the laundry care appliance (100).

9. Laundry care appliance (100) according to one of the preceding claims, **characterised in that** the controller (119) is embodied, during a correction time interval of the second time segment, to activate the pump (113) to briefly rotate the impeller (113-3) with a correction rotational speed in the second direction of rotation (114-2) in order to significantly reduce the volume flow of the washing liquid flowing back in the return flow direction (123) during the correction time interval,
wherein the controller (119) is embodied in particular, during a pump time interval of the second time segment which connects to the correction time interval of the second time segment, to activate the pump (113) to rotate the impeller (113-3) with a pump rotational speed in the second direction of rotation (114-2) in order to reduce the volume flow of the washing liquid flowing back in the return flow direction (123) during the pump time interval, wherein the correction rotational speed is in particular greater than the pump rotational speed.

10. Laundry care appliance (100) according to one of the preceding claims, **characterised in that** the pump (113) is arranged in a lower region (103-1) of a housing interior (103) of the laundry care appliance (100) which is delimited by an appliance housing (101), wherein the lower region (103-1) is facing a housing base (101-2) of the appliance housing (101), and that
the pump pipe (115, 115-1, 115-2) fluidically connected to the pump (113) extends from the lower region (103-1) of the housing interior (103) into an upper region (103-2) of the housing interior (103), wherein the upper region (103-2) of the housing interior (103) is facing a housing top side (101-3) of the appliance housing (101), wherein the pump (113) is arranged in particular at an installation height (129) of the laundry care appliance (100) and wherein the pump pipe (115, 115-1, 115-2) is arranged at least in sections above the installation height (129).

11. Laundry care appliance (100) according to one of the preceding claims, **characterised in that** the pump pipe (115, 115-1, 115-2) comprises a drain pipe (115-1), which is fluidically connected to an external region (120) of the laundry care appliance (100), wherein the pump (113) is embodied, during a drain process, to pump washing liquid out of the suction pipe (111) into the suction chamber (113-1), out of the suction chamber (113-1) into the pressure chamber (113-2), out of the pressure chamber (113-2) into the drain pipe (115-1) and out of the drain pipe (115-1) into the external region (120) of the laundry care appliance (100).

12. Laundry care appliance (100) according to one of the preceding claims, **characterised in that** the laundry care appliance (100) has an inlet element (133), in particular an inlet nozzle, for introducing washing liquid into the outer tub (105), and that the pump pipe (115, 115-1, 115-2) comprises a recirculation pipe (115-2) which is fluidically connected to the inlet element (133), wherein the variable-speed pump (113) is embodied, during a recirculation process, to drain washing liquid through the discharge opening (109) out from the outer tub (105) into the suction pipe (111) and to pump the drained washing liquid from the suction pipe (111) into the suction chamber (113-1), from the suction chamber (113-1) into the pressure chamber (113-2) from the pressure chamber (113-2) into the recirculation pipe (115-2) and through the inlet element (133) back into the outer tub (105).

13. Laundry care appliance (100) according to claim 12, **characterised in that** the variable-speed pump (113) has a first lower pump (113) with a suction chamber (113-1) fluidically connected to the suction pipe (111) and with a pressure chamber (113-2) fluidically connected to the drain pipe (115-1), and a further lower pump (113) with a further suction chamber (113-1) fluidically connected to the suction pipe (111) and with a further pressure chamber (113-2) fluidically connected to the drain pump (115-2), or that
the variable-speed pump (113) has a suction chamber (113-1) fluidically connected to the suction pipe (111), a first pressure chamber (113-2) which is fluidically connected to the suction chamber (113-1) and is fluidically connected to the drain pipe (115-1) and a second pressure chamber (113-2) which is fluidically connected to the suction chamber (113-1) and is fluidically connected to the recirculation pipe (115-2).

14. Method (200) for pumping washing liquid in a laundry care appliance according to one of claims 1 to 13,
**characterised in that** the method (200) comprises the following method steps,
recording (201) a rotation of the impeller (113-3) in the first direction of rotation (114-1) during a first time segment with a deactivated pump (113) by means of the controller (119), in order to record washing liquid flowing back in a return flow direction (123) which is opposite to the pump direction (121) from the pump pipe (115, 115-1, 115-2) into the pressure chamber (113-2) and from the pressure chamber (113-2) into the suction chamber (113-1),
activating (203) the pump (113) during a second time segment which connects to the first time segment by means of the controller (119), in order to rotate the impeller (113-3) in the second direction of rotation (114-2) and to reduce the volume flow of the return flowing washing liquid.

15. Method (200) according to claim 14, **characterised in that** the variable-speed pump (113) has an electric motor for rotating the impeller (113-3) in the second direction of rotation (114-2) and that the controller (119) has a performance recording element for recording an electrical performance value of the electric motor, wherein the performance recording element is embodied to record a first electrical detection performance value induced by rotation of the impeller (113-3) in the first direction of rotation (114-1) and that
the activation (203) of the pump (113) is carried out by means of the controller (119) during a second time segment which connects to the first time segment if the recorded first electrical detection performance value exceeds a first electric threshold performance value.

## Revendications

1. Appareil d'entretien de linge (100) avec une cuve de lavage (105) pour recevoir le liquide de lavage, dans lequel la cuve de lavage (105) présente un orifice d'évacuation (109), dans lequel l'orifice d'évacuation (109) est relié en termes de technique des fluides à une conduite d'aspiration (111), à une pompe à vitesse variable (113) pour pomper du liquide de lavage, dans lequel la pompe (113) présente une chambre d'aspiration (113-1), laquelle est reliée en termes de technique des fluides à la conduite d'aspiration (111), et dans lequel la pompe (113) présente une chambre de pression (113-2), laquelle est reliée en termes de technique des fluides à la chambre d'aspiration (113-1) et en termes de technique des fluides à une conduite de pompage (115, 115-1, 115-2), dans lequel la pompe (113) présente une turbine (113-3) qui est conçue pour tourner dans un premier sens de rotation (114-1) et un deuxième sens de rotation (114-2) opposé au premier sens de rotation (114-1), et une commande (119) pour commander la pompe à vitesse variable (113), dans lequel la commande (119) est conçue pour activer la pompe (113) pendant un processus de pompage, pour faire tourner la turbine (113-3) dans le deuxième sens de rotation (114-2) et pomper le liquide de lavage dans un sens de pompage (121) de la chambre d'aspiration (113-1) à la chambre de pression (113-2) et de la chambre de pression (113-2) à la conduite de pompage (115, 115-1, 115-2), **caractérisé en ce que**
la commande (119) est conçue pour détecter, pendant une première période avec une pompe désactivée (113), une rotation de la turbine (113-3) dans un premier sens de rotation (114-1), pour détecter du liquide de lavage refluant de la conduite de pompage (115, 115-1, 115-2) à la chambre de pression (113-2) et de la chambre de pression (113-2) à la chambre d'aspiration (113-1) dans un sens de reflux (123) opposé au sens de pompage (121), et **en ce que**
la commande (119) est conçue pour activer la pompe (113) pendant une deuxième période consécutive à la première période, afin de faire tourner la turbine (113-3) dans le deuxième sens de rotation (114-2) et de réduire le débit volumétrique du liquide de lavage refluant.

2. Appareil d'entretien de linge (100) selon la revendication 1, **caractérisé en ce que** la pompe à vitesse variable (113) présente un moteur électrique pour faire tourner la turbine (113-3) dans le deuxième sens de rotation (114-2), et **en ce que** la commande (119) présente un élément de détection de puissance pour détecter une valeur de puissance électrique du moteur électrique, dans lequel l'élément de détection de puissance est conçu pour détecter une première valeur de puissance de détection électrique induite par la rotation de la turbine (113-3) dans le premier sens de rotation (114-1),
dans lequel la commande (119) est conçue pour achever la première période et, pendant la deuxième période consécutive à la première période, activer la pompe (113) pour faire tourner la turbine (113-3) dans le deuxième sens de rotation (114-2), lorsque la première valeur de puissance de détection électrique saisie dépasse une première valeur de puissance seuil électrique.

3. Appareil d'entretien de linge (100) selon la revendication 2, **caractérisé en ce que** l'élément de détection de puissance est conçu pour détecter une deuxième valeur de puissance de détection électrique entraînant la rotation de la turbine (113-3) dans le deuxième sens de rotation (114-2), et **en ce que**
la commande (119) est conçue pour achever la deuxième période, et désactiver la pompe (113) lorsque la deuxième valeur de puissance de détection électrique saisie dépasse une deuxième valeur de puissance seuil électrique, dans lequel la deuxième valeur de puissance seuil électrique est, en particulier, plus faible que la première valeur de puissance seuil électrique.

4. Appareil d'entretien de linge (100) selon la revendication 2 ou 3, **caractérisé en ce que** l'appareil d'entretien de linge (100) présente un dispositif d'alimentation en liquide de lavage, lequel est relié en termes de technique des fluides à la cuve de lavage (105) et est conçu pour alimenter la cuve de lavage (105) en liquide de lavage, dans lequel la commande (119) est conçue pour activer le dispositif d'alimentation en liquide de lavage pour alimenter en liquide de lavage lorsque la première valeur de puissance de détection électrique détectée est inférieure à une valeur de puissance seuil minimale.

5. Appareil d'entretien de linge (100) selon l'une des revendications précédentes, **caractérisé en ce que** l'appareil d'entretien de linge (100) présente un capteur de débit pour détecter une première vitesse d'écoulement du liquide de lavage refluant de la conduite de pompage (115, 115-1, 115-2) dans la conduite d'aspiration (111) dans le sens de reflux (123) et pour détecter une deuxième vitesse d'écoulement du liquide de lavage pompé dans le sens de pompage (121) de la conduite d'aspiration (111) à la conduite de pompage (115, 115-1, 115-2),
dans lequel la commande (119) est conçue pour achever la première période et, pendant la deuxième période consécutive à la première période, activer la pompe (113) de rotation de la turbine (113-3) dans le deuxième sens de rotation (114-2), lorsque la première vitesse d'écoulement détectée dépasse une première valeur seuil de vitesse d'écoulement, et / ou **en ce que**
la commande (119) est conçue pour achever la deuxième période et désactiver la pompe (113), lorsque la deuxième vitesse d'écoulement saisie dépasse une deuxième valeur seuil de vitesse d'écoulement.

6. Appareil d'entretien de linge (100) selon la revendication 1, **caractérisé en ce que** la commande (119) est conçue pour achever la première période après une première durée prédéterminée et commencer la deuxième période, et / ou **en ce que** la commande (119) est conçue pour achever la deuxième période après une deuxième durée prédéterminée.

7. Appareil d'entretien de linge (100) selon l'une des revendications précédentes, **caractérisé en ce que** la commande (119) est conçue pour activer, pendant la deuxième période, la pompe (113) pour la rotation de la turbine (113-3) dans le deuxième sens de rotation (114-2) à une vitesse de rotation minimale, pour réduire le débit volumétrique du liquide de lavage refluant ou stopper le débit volumétrique du liquide de lavage refluant.

8. Appareil d'entretien de linge (100) selon l'une des revendications précédentes 1 à 6, **caractérisé en ce que** la commande (119) est conçue pour activer, pendant la deuxième période, la pompe (113) pour la rotation de la turbine (113-3) dans le deuxième sens de rotation (114-2) à une vitesse de rotation maximale, pour pomper du liquide de lavage de la conduite d'aspiration (111) à la chambre d'aspiration (113-1), de la chambre d'aspiration (113-1) à la chambre de pression (113-2) et de la chambre de pression (113-2) jusqu'à un niveau de pompage (125) dans la conduite de pompage (115, 115-1, 115-2), dans lequel le niveau de pompage (125) est situé plus particulièrement à une hauteur de niveau de pompage (127), laquelle est supérieure à une hauteur de montage (129) de la pompe (113) à l'intérieur de l'appareil d'entretien de linge (100).

9. Appareil d'entretien de linge (100) selon l'une des revendications précédentes, **caractérisé en ce que** la commande (119) est conçue pour activer, pendant un intervalle de temps de correction de la deuxième période, la pompe (113) pour la rotation temporaire de la turbine (113-3) à une vitesse de rotation de correction dans le deuxième sens de rotation (114-2), pour réduire significativement le débit volumétrique du liquide de lavage refluant dans le sens de reflux (123) pendant l'intervalle de temps de correction,
dans lequel la commande (119) est conçue, plus particulièrement, pour activer, pendant un intervalle de temps de pompage de la deuxième période consécutif à l'intervalle de temps de correction de la deuxième période, la pompe (113) pour la rotation de la turbine (113-3) avec une vitesse de pompage dans le deuxième sens de rotation (114-2), pour réduire le débit volumétrique du liquide de lavage refluant dans le sens de reflux (123) pendant l'intervalle de temps de pompage, dans lequel la vitesse de rotation de correction est plus particulièrement supérieure à la vitesse de pompage.

10. Appareil d'entretien de linge (100) selon l'une des revendications précédentes, **caractérisé en ce que** la pompe (113) est disposée dans une zone inférieure (103-1) d'un espace intérieur du corps (103) limité par un corps d'appareil (101) de l'appareil d'entretien de linge (100), dans lequel la zone inférieure (103-1) est orientée vers un fond de corps (101-2) du corps d'appareil (101), et **en ce que**
la conduite de pompage (115, 115-1, 115-2) reliée en termes de technique des fluides à la pompe (113) s'étend de la zone inférieure (103-1) de l'espace intérieur du corps (103) à une zone supérieure (103-2) de l'espace intérieur du corps (103), dans lequel la zone supérieure (103-2) de l'espace intérieur du corps (103) est orientée vers un côté supérieur de corps (101-3) du corps d'appareil (101), dans lequel la pompe (113) est disposée, plus particulièrement, à une hauteur de montage (129) de l'appareil d'entretien de linge (100), et dans lequel la conduite de pompage (115, 115-1, 115-2) est disposée au moins par sections au-dessus de la hauteur de montage (129).

11. Appareil d'entretien de linge (100) selon l'une des revendications précédentes, **caractérisé en ce que** la conduite de pompage (115, 115-1, 115-2) comprend une conduite d'évacuation (115-1), laquelle est reliée en termes de technique des fluides à une zone extérieure (120) de l'appareil d'entretien de linge (100), dans lequel la pompe (113) est conçue pour pomper, pendant un processus d'évacuation, du liquide de lavage de la conduite d'aspiration (111) à la chambre d'aspiration (113-1), de la chambre d'aspiration (113-1) à la chambre de pression (113-2), de la chambre de pression (113-2) à la conduite d'évacuation (115-1) et de la conduite d'évacuation (115-1) à la zone extérieure (120) de l'appareil d'entretien de linge (100).

12. Appareil d'entretien de linge (100) selon l'une des revendications précédentes, **caractérisé en ce que** l'appareil d'entretien de linge (100) présente un élément d'admission (133), plus particulièrement une buse d'admission, pour l'introduction de liquide de lavage dans la cuve de lavage (105), et **en ce que** la conduite de pompage (115, 115-1, 115-2) comprend une conduite de transvasement par pompe (115-2), laquelle est reliée en termes de technique des fluides à l'élément d'admission (133), dans lequel la pompe à vitesse variable (113) est conçue pour évacuer par pompage, pendant un processus de transvasement par pompe, du liquide de lavage par l'orifice d'évacuation (109) de la cuve de lavage (105) à la conduite d'aspiration (111) et pour pomper le liquide de lavage évacué par pompage de la conduite d'aspiration (111) à la chambre d'aspiration (113-1), de la chambre d'aspiration (113-1) à la chambre de pression (113-2), de la chambre de pression (113-2) à la conduite de transvasement par pompe (115-2) et par l'élément d'admission (133) à nouveau dans la cuve de lavage (105).

13. Appareil d'entretien de linge (100) selon la revendication 12, **caractérisé en ce que** la pompe à vitesse variable (113) présente une première sous-pompe (113) avec une chambre d'aspiration (113-1) reliée en termes de technique des fluides à la conduite d'aspiration (111) et avec une chambre de pression (113-2) reliée en termes de technique des fluides à la conduite d'évacuation (115-1), et une autre sous-pompe (113) avec une autre chambre d'aspiration (113-1) reliée en termes de technique des fluides à la conduite d'aspiration (111), et avec une autre chambre de pression (113-2) reliée en termes de technique des fluides à la conduite de transvasement par pompe (115-2), ou **en ce que** la pompe à vitesse variable (113) présente une chambre d'aspiration (113-1) reliée en termes de technique des fluides à la conduite d'aspiration (111), une première chambre de pression (113-2) reliée en termes de technique des fluides à la chambre d'aspiration (113-1), laquelle est reliée en termes de technique des fluides à la conduite d'évacuation (115-1), et une deuxième chambre de pression (113-2) reliée en termes de technique des fluides à la chambre d'aspiration (113-1), laquelle est reliée en termes de technique des fluides à la conduite de transvasement par pompe (115-2).

14. Procédé (200) de pompage de liquide de lavage dans un appareil d'entretien de linge selon l'une des revendications 1 à 13, **caractérisé en ce que** le procédé (200) comprend les étapes de procédé suivantes,
détection (201) d'une rotation de la turbine (113-3) dans le premier sens de rotation (114-1) pendant une première période avec une pompe désactivée (113) par la commande (119), pour détecter du liquide de lavage refluant de la conduite de pompage (115, 115-1, 115-2) à la chambre de pression (113-2) et de la chambre de pression (113-2) à la chambre d'aspiration (113-1) dans un sens de reflux (123) opposé au sens de pompage (121), activation (203) de la pompe (113), pendant une deuxième période consécutive à la première période par la commande (119), pour faire tourner la turbine (113-3) dans le deuxième sens de rotation (114-2) et pour réduire le débit volumétrique du liquide de lavage refluant.

15. Procédé (200) selon la revendication 14, **caractérisé en ce que** la pompe à vitesse variable (113) présente un moteur électrique pour faire tourner la turbine (113-3) dans le deuxième sens de rotation (114-2), et **en ce que** la commande (119) présente un élément de détection de puissance pour détecter une valeur de puissance électrique du moteur électrique, dans lequel l'élément de détection de puissance est conçu pour détecter une première valeur de puissance de détection électrique induite par rotation de la turbine (113-3) dans le premier sens de rotation (114-1), et **en ce que**
l'activation (203) de la pompe (113), pendant une deuxième période consécutive à la première période, est effectuée par la commande (119), lorsque la première valeur de puissance de détection électrique saisie dépasse une première valeur de puissance seuil électrique.
